# EUROPEAN PATENT SPECIFICATION

(11) **EP 1 935 168 B1**
(45) Date of publication and mention of the grant of the patent: **05.03.2014**
(21) Application number: 06799689.2
(22) Date of filing: 20.09.2006
(51) Int. Cl.: H04M 3/38, H04W 48/02

(54) **METHOD OF SHARING A MOBILE TELECOMMUNICATION NETWORK WITH RESTRICTED ACCESS AND TELECOMMUNICATION NETWORK IMPLEMENTING THE METHOD**
VERFAHREN ZUM GEMEINSAMEN NUTZEN EINES MOBILEN TELEKOMMUNIKATIONSNETZES MIT EINGESCHRÄNKTEM ZUGANG UND DAS VERFAHREN IMPLEMENTIERENDES TELEKOMMUNIKATIONSNETZ
PROCEDE POUR PARTAGER UN RESEAU DE TELECOMMUNICATION MOBILE A ACCES RESTREINT, ET RESEAU DE TELECOMMUNICATION SERVANT A LA MISE EN OEUVRE DE CE PROCEDE

(30) Priority: 07.10.2005 SE 0502210
(43) Date of publication of application: 25.06.2008
(73) Proprietor: TeliaSonera AB, S-106 63 Stockholm (SE)
(72) Inventor: FRANK, Robert, S-116 62 Stockholm (SE); DAHLÉN, Anders, 137 34 Västerhaninge (SE)
(74) Representative: Holmberg, Magnus
(86) International application number: PCT/SE2006/001070
(87) International publication number: WO 2007/043932

(56) References cited:
- EP-A1- 1 032 236
- EP-A1- 1 032 236
- WO-A1-2004/040935
- WO-A2-02/065792
- US-A1- 2002 173 316
- US-B1- 6 826 414

## Description

### FIELD OF THE INVENTION

The present invention relates to a method of sharing a mobile telecommunication network with restricted cell access in non-shared cells. The invention employs cell access control classes to differentiate mobile stations. The intended use of the invention is to make it technically feasible to differentiate radio coverage between partners sharing a common third generation, e.g. WCDMA, network in areas where expanded coverage results in non-shared cells.

### STATE OF THE ART

In a mobile telecommunication system, mobile stations communicate via a radio access network to one or more core networks. The mobile stations or user equipment units can be mobile telephones and lap tops with mobile termination etc. The radio access network covers a geographical area which is divided into cell areas, with each cell area being served by a base station. The base stations communicate over the air interface with the mobile stations within the range of the base stations. In the radio access network, several base stations are typically connected to a radio network controller or base station controller, which supervises and coordinates various activities of the base stations. The radio network controllers are typically connected to one or more core networks.

One example of a radio access network is the Universal Mobile Telecommunications UMTS Terrestrial Radio Access Network (UTRAN). The UMTS is a third generation, 3G, system which in some respects builds upon the radio access technology known as Global system for mobile communications GSM, the second generation, 2G, system. UTRAN is essentially a radio access network providing wideband code division multiple access WCDMA to user equipment units UEs. The third generation partnership project 3GPP has undertaken to evolve further the UTRAN and GSM based radio access network technologies.

In a network sharing, the sharing partners, usually mobile telecommunication operators, use the same radio access network and consequently by default they offer their respective customers identical radio coverage. The radio coverage in the shared area may have one or several blind spots and some but not all of the sharing partners may want to fill this coverage. This results in non-shared cells that do not form a continuous area of radio access to all sharing partners. The expanded or reinforced coverage thus becomes rather patchy. The technical problem is to find a mechanism that enables the sharing partners to differentiate their radio coverage and at the same time the solution should not increase consumption of system resources, radio access as well as core network resources.

The published patent application US2002/0,111,180 describes a coordinated subscriber access handling for shared network support in which the above-mentioned problem is addressed. To determine access rights in a shared network context, a telecommunications network transmits, in a broadcast channel, an access group eligibility message to user equipment units. The access group eligibility message enables the user equipment unit to ascertain, on a basis of access group to which it belongs, whether the units is eligible to operate in a cell for which the access group eligibility message is transmitted.

US 6,826,414 describes a mobile communication system having a cellular communications network comprising a public network portion and a private network portion using a common radio interface protocol. Cells are shared by public and private network portions. They are separated by means of PLMN, Public Land Mobile Network, codes designed as public or private.

Another feature of UMTS as defined by 3GPP is the standardized function called Cell Access Restriction. This is used in overload conditions, for example during situations where large groups of people are gathered, in emergency situations or when the system is restarted. A number of access classes or service option groups, at present the first ten, are assigned to the mobile stations. In order to permit access gradually, all mobile stations have been allocated a random number 0 to 9 which identifies (a part of) the subscriber's access class. The number is permanently stored on the (UMTS) subscriber identity module (U)SIM, in a field of EF-ACC (Elementary File-Access Control Class), when the subscriber identity module is issued. The system broadcasts in each cell access classes that are allowed to use this cell. Thus, for example at system restart, an operator can easily indicate to the mobile stations which of them may use the cell. This may prevent the system from becoming overloaded with traffic. An advantage of this feature is that it scales very well in that the system overhead does not depend on the number of mobile stations. The 3GPP specification assumes that access control is not used under normal operating conditions, but rather under certain specific conditions where the operator wants to protect its radio access channels from becoming overloaded. For a detailed description see for example 3GPP TS25.304 "User Equipment CUE) Procedures in Idle Mode and Procedures for Cell Reselection in Connecting Mode" and the published patent application US 2002/0,173,316. The feature Cell Access Restriction has not been used for controlling access in non-shared cells in shared networks.

WO 02/065792-A2 discloses a system and method to limit access to the network during overload conditions by transmitting access control signals to the mobile terminals, where the messages specify a subset of the mobile terminals which will be prevented from accessing the network. Thus, allowing the remaining terminals to access the network.

EP 1 032 236-A1 discloses the control of traffic congestion in a cellular satellite telecommunications network. User terminals are grouped together in different predetermined access classes which can be controlled individually in order to restrict access to the network.

### SUMMARY OF THE INVENTION

The present invention proposes to use the cell access classes in a novel way. A unique subset of the first ten access classes is allocated to each sharing partner. Each operator then assigns the given set of access classes among its subscribers. In areas (cells) where only subscribers of one of the sharing partners should have access to the radio network, the cell's access restriction is set to only allow customers from one of the uniquely assigned sets of access classes, i.e. the ones corresponding to the sharing partner with allowed access. In this way, subscribers of non-shared partners are effectively prohibited from accessing the cell with very little system overhead.

In a first aspect, the invention provides a method for sharing a telecommunication system comprising:
a number of radio access cells of which a first group of cells are shared by different operators, and of which at least one second group of cells are not shared by all operators;
a number of mobile stations, each belonging to one subscriber of one of the different operators, wherein the system is arranged to support cell access restriction control using a number of access classes.

According to the invention, the method comprises the steps of:
allocating a subset of the access classes to each sharing operator;
each operator assigning his respective subset of the access classes to his subscribers;
setting cells' access restriction in non-shared cells so that mobile stations of subscribers to operators not sharing the cells are restricted from using the non-shared cells.

Suitably, the cell access restriction control is as defined in the 3rd Generation Partnership Project, 3GPP.

In a second aspect, the invention provides a telecommunication system implementing such a method.

The invention is defined in claims 1 and 7, while preferred embodiments are set forth in the dependent claims.

According to an embodiment of the method, a non-shared cell is sent as a possible neighbouring cell in cells belonging to an operator sharing the cell and neighbouring to the non-shared cell in question.

According to an embodiment of the method, the PLMN identity of said non- shared cell is set in SIB18 of a shared cell to "false PLMN", and "false PLMN" is set as an equivalent PLMN to the PLMN broadcasted in the MIB of the non-shared cell in question but only to those mobile stations allowed to access the non-shared cell.

According to an embodiment of the telecommunication system, the telecommunication system is arranged to send a non-shared cell as a possible neighbouring cell in cells belonging to an operator sharing the cell and neighbouring to the non-shared cell in question.

According to an embodiment of the telecommunication system, the PLMN identity of said non-shared cell is set in SIB18 of shared cells to "false PLMN", and "false PLMN" is set as an equivalent PLMN to the PLMN broadcasted in the MIB of the non-shared cell in question but only to those mobile stations allowed to access the non-shared cell.

### BRIEF DESCRIPTION OF THE DRAWINGS

The invention will be described in detail below with reference to the attached drawings on which:
- fig. 1 is a schematic illustration of a shared network with non-shared cells in a patchy pattern,
- fig. 2 is a schematic view of a mobile station with inserted subscriber identity module.

### DETAILED DESCRIPTION OF PREFERRED EMBODIMENTS

The invention generally relates to a method in a mobile telecommunication system and such a system implementing the method. The entities and operation of such systems are generally known and not described in detail here. The invention is primarily intended for implementation in third generation mobile telecommunication systems, e.g. as defined by 3GPP, but the invention may be equally applicable in similar and future generation mobile telecommunication systems.

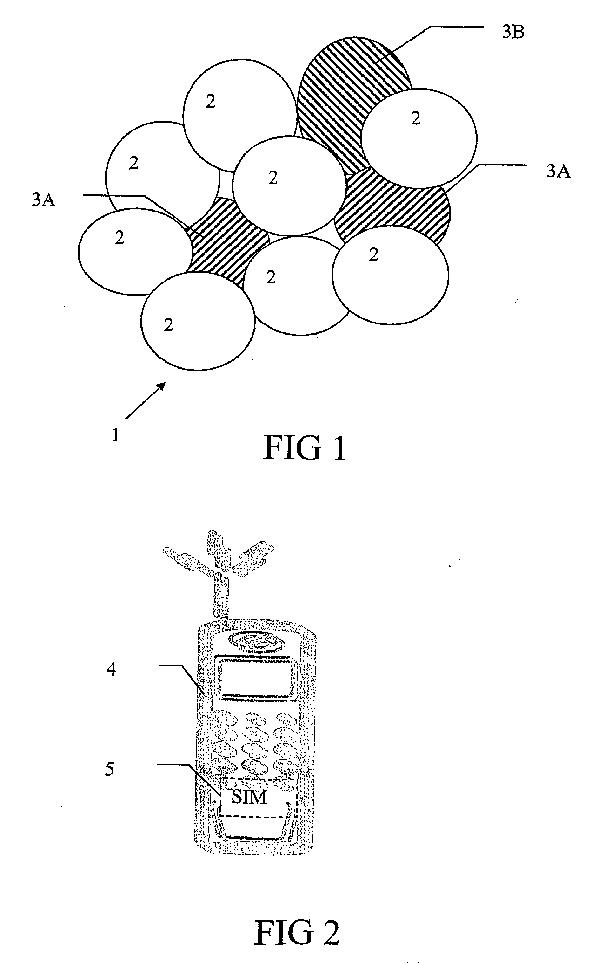

Fig. 1 shows a typical radio coverage with a number of cells 1 resulting from a shared network structure. A number of mobile telecommunication operators or partners share a radio access network, resulting in a group of shared cells 2 with identical coverage. As the coverage usually is not completely continuous some of the operators may decide to fill blind spots with his own base stations. This results in a group of non-shared cells of which some cells 3A belong to the first operator and other non-shared cells 3B belong to a second operator. With more than two operators the pattern may be more complex, having some cells shared by all and other cells shared by some operators and yet further cells non-shared and only belonging to one operator. This situation is accommodated by the present invention without changing the principle.

As mentioned in the introduction access classes suitably as defined by 3GPP are used to achieve the functionality of the present invention. All mobile stations are members of one out of ten randomly allocated mobile populations, defined as access classes 0-9. For each mobile station owned by a subscriber the respective access class is stored in a part controlled by the relevant operator, suitably in a subscriber identity module SIM or USIM (= UMTS SIM). As is well known, the identity module is a smart card inserted in the mobile station carrying subscriber information, such as phone number and other account information as well as other memory units accessible to the subscriber and/or the operator.

Fig. 2 shows schematically a mobile station 4 with a SIM 5 inserted.

According to a preferred embodiment of the invention, a unique subset of the first ten access classes is assigned to each sharing partner. For example operator A is given access classes 0-4 and operator B is given access classes 5-9.

Each operator assigns his given set of access classes randomly among its subscribers. In this example operator A would assign one access class among 0-4 randomly to each USIM and operator B would assign one access class from 5-9 randomly to each of his USIMs. For instance, the last figure of the subscriber number may be used, so that for operator A all subscribers with phone numbers ending with 0 or 1, is assigned access class 0. It is only important that the subscribers are evenly distributed over the classes. It should be noted that this approach will maintain the original purpose of the access classes, if the number of sharing partners is sufficiently low, i.e. 2-3.

Non-shared cells 3A and 3B of the network are identified. In areas, cells, where only customers of one of the sharing partners should have access to the radio network, the cell's access restriction is set to allow only customers from one of the uniquely assigned subsets of access classes, i.e. the ones corresponding to the sharing partner. For instance, in cells 3A where only subscribers of operator A should have access, the access classes 5-9 are restricted from use. In the non-shared cells 3B, of course access classes 0-4 are restricted from use.

To improve the situation for subscribers to sharing partners whose subscribers are access restricted from a cell, some auxiliary functions should preferably be used as well. The reason is that third generation (WCDMA) mobiles may still camp or be handed over to a cell that is access restricted for them. The term "camp" is a 3GPP defined term meaning that the mobile station often referred to as user equipment UE, has selected a cell and monitors system and possibly paging information broadcasted by the base station. However, the mobile station does not necessarily have access right in the cell. There are basically three ways a mobile station may end up on a restricted cell: due to handover in connected mode, cell reselection or cell selection at power up.

In order to avoid that the mobile station is handed over to a restricted cell, access rights in connecting mode can be set appropriately using SNAC, Shared Network Area/Access **(?)** Control. If access for a specific mobile station UE needs to be restricted, the core network shall provide shared network area access information for that mobile station. The SNA access information indicates which operator/PLMN and/or which SNA mobile station is allowed to access. Based on whether the local area belongs to the operator or shared network area the mobile station is allowed to access, the telecommunication system determines if access to a certain local area for a certain mobile station shall be allowed. (TAGET FRÅN 3GPP TS25.401)

The fact that the mobile station may still choose to camp on a restricted cell, may lead to a technical problem in regions where the restricted operator has a second generation, e.g. GSM, coverage. The mobile station may choose to camp on the access restricted cell, in which it cannot get service, instead of the 2G cell in which service is allowed. In that case the mobile may display "Emergency calls only". This will probably confuse the customers of the operator that are access restricted from the cell.

In order to be able to use the invention in such areas the following scheme is proposed as a preferred embodiment of the invention. System information Block 18 (SIB18) indicating to which PLMN identity a neighbouring cell belongs, should be used to indicate that the 3G cell belongs to only one of the sharing partners. The mobile station will then not make cell-reselection to the access restricted cell, which avoids the problem. To be more precise: SIB18 is sent in neighbouring 3G cells to the 3G cells that only belong to one or some of the sharing partners. The PLMN identity of a non-shared cell is set to "false PLMN". The concept "false PLMN" is disclosed in the commonly owned published Swedish patent application No. 04401997-2. It means that the PLMN in SIB18 identity is set as an equivalent PLMN, EPLMN, to the PLMN broadcasted in the Master Information Block (MIB) of the 3G cells for those mobile stations that shall be able to access the non-shared 3G cell. Mobile stations that are access restricted do not receive the false PLMN in the EPLMN list and consequently will not reselect the non-shared 3G cell. SIB18 and the MIB are built in a 3G cell on the Broadcast Channel (BCCH).

Of course, 3G cells that are restricted for an operator are not sent as neighbouring cells in the 2G network of that operator.

Finally, there is the case where mobile stations are powered on in the coverage area of a non-shared cell. To reduce the probability that a mobile station camp on a cell to which it is restricted from service when there is an overlapping 2G cell of the selected operator, the parameter Qoffset1 of the neighbouring 2G cells belonging to the restricted operator can be set to a sufficiently low value, suitably -50 dB. Then these cells will be highly ranked and mobile stations will very likely reselect to such a 2G cell. To prevent the mobile stations that are not restricted from service to reselect these 2G cells the PLMN identity of these 2G cells must be indicated in SIB18.

The functionality of SIB18 and MIB in brief is that SIB18 indicates the PLMN identity of neighbour cells. If the PLMN identity on SIB18 is not the registrered PLMN or EPLMN the UE is not allowed to perform a cell reselection to it. The MIB contains the PLMN identity of the cell that send this MIB. The MIB and SIB content is set in the RNC (Radio Network Controller).

Thus, the present invention solves the problem of differentiating radio coverage between partners sharing a common telecommunication network, especially when a telecommunication system uses defined access classes, such as the third generation WCDMA network. However, the invention does not exclude the use of access classes as originally intended by the 3GPP-specification, in other words sharing partners may still access restrict their own customers to protect their own core network resources in cases of overload and congestion. For such a use case the auxiliary functions described above are not needed.

The invention is implemented by means of combination of hardware and software in various parts of the telecommunication system as will be readily realized by a person skilled in the art. The scope of the invention is defined only by the following claims.

## Claims

1. A method for sharing a telecommunication system comprising:
a number of radio access cells (1) of which a first group of cells (2) are shared by different operators, and of which at least one second group (3A, 3B) of cells are not shared by all operators;
a number of mobile stations (5), each belonging to one subscriber of one of the different operators, wherein the system is arranged to support cell access restriction control using a number of access classes,
**characterised by** the steps of:
allocating a subset of the access classes to each sharing operator;
each operator assigning his respective subset of the access classes to his subscribers;
setting cells' access restriction in non-shared cells (3A, 3B) so that mobile stations (5) of subscribers to operators not sharing the cells are restricted from using the non-shared cells.

2. A method according to claim 1, wherein the cell access restriction control is as defined in the 3rd Generation Partnership Project, 3GPP.

3. A method according to claim 2, wherein the access classes of the subscribers are stored permanently on the subscriber identity module, USIM (4).

4. A method according to any one of claims 2 and 3, wherein access rights of mobile stations in connected mode are controlled by means of shared network area, SNA, Access Information for that mobile station.

5. A method according to any one of claims 2, 3 and 4, wherein the telecommunication system further supports at least one second generation, 2G, operator, and such an operator not sharing a non-shared cell has an overlapping coverage by means of a 2G cell, wherein the Qoffset of the overlapping 2G cell is set to a low value to provoke reselection to the overlapping 2G cell for subscribers belonging to said operator and situated in the non-shared cell.

6. A method according to claim 5, wherein Qoffset is set to -50 dB.

7. A telecommunication system comprising:
a number of radio access cells (1) of which a first group of cells (2) are shared by different operators, and of which at least one second group of cells (3A, 3B) are not shared by all operators;
a number of mobile stations (4), each belonging to one subscriber of one of the different operators, wherein the system is arranged to support cell access restriction control using a number of access classes,
**characterised in that**:
a subset of the access classes is allocated to each sharing operator;
for each operator, his respective subset of the access classes is assigned to his subscribers;
cells' access restriction in non-shared cells (3A, 3B) is set so that mobile stations (4) of subscribers to operators not sharing the cells are restricted from using the non-shared cells.

8. A telecommunication system according to claim 7, wherein the cell access restriction control is as defined in the 3rd Generation Partnership Project, 3GPP.

9. A telecommunication system according to claim 8, wherein the access classes of the subscribers are stored permanently on the subscriber identity module, USIM (5).

10. A telecommunication system according to any one of claims 7 and 8, wherein access rights of mobile stations in connected mode are controlled by means of shared network area, SNA, Access Information for that mobile station.

11. A telecommunication system according to any one of claims 8 - 10, wherein the telecommunication system further is arranged to support at least one second generation, 2G, operator, and such an operator not sharing a non-shared cell has an overlapping coverage by means of a 2G cell, wherein the Qoffset of the overlapping 2G cell is set to a low value to provoke reselection to the overlapping 2G cell for subscribers belonging to said operator and situated in the non-shared cell.

12. A telecommunication system according to claim 11, wherein Qoffset is set to -50 dB.

## Patentansprüche

1. Verfahren zum gemeinsamen Nutzen eines Telekommunikationssystems, das Folgendes umfasst:
eine Anzahl von Funkzugangszellen (1), von denen eine erste Gruppe von Zellen (2) von unterschiedlichen Betreibern gemeinsam genutzt wird und von denen mindestens eine zweite Gruppe (3A, 3B) von Zellen von allen Betreibern nicht gemeinsam genutzt wird;
eine Anzahl von Mobilstationen (5), die je zu einem Teilnehmer eines der unterschiedlichen Betreiber gehören, wobei das System ausgelegt ist, um Zellenzugangseinschränkungssteuerung unter Verwendung einer Anzahl von Zugangsklassen zu unterstützen,
**gekennzeichnet durch** folgende Schritte:
Zuweisen einer Untermenge der Zugangsklassen zu jedem gemeinsam nutzenden Betreiber;
**durch** jeden Betreiber Zuordnen seiner jeweiligen Untermenge der Zugangsklassen zu seinen Teilnehmern;
Festlegen einer Zugangseinschränkung von Zellen in nicht gemeinsam genutzten Zellen (3A, 3B), sodass Mobilstationen (5) von Teilnehmern von Betreibern, welche die Zellen nicht gemeinsam nutzen, in der Verwendung der nicht gemeinsam genutzten Zellen eingeschränkt sind.

2. Verfahren nach Anspruch 1, wobei die Zellenzugangseinschränkungssteuerung so ist wie im 3rd Generation Partnership Project, 3GPP, definiert.

3. Verfahren nach Anspruch 2, wobei die Zugangsklassen der Teilnehmer dauerhaft auf dem Teilnehmeridentifikationsmodul, USIM (4), gespeichert werden.

4. Verfahren nach einem der Ansprüche 2 und 3, wobei Zugangsrechte von Mobilstationen im verbundenen Modus mittels Zugangsinformationen eines gemeinsam genutzten Netzbereichs, SNA, für diese Mobilstation gesteuert werden.

5. Verfahren nach einem der Ansprüche 2, 3 und 4, wobei das Telekommunikationssystem weiter mindestens einen Betreiber der zweiten Generation, 2G, unterstützt und ein solcher Betreiber, der eine nicht gemeinsam genutzte Zelle nicht gemeinsam nutzt, eine überlappende Bedeckung mittels einer 2G-Zelle aufweist, wobei der Qoffset der überlappenden 2G-Zelle auf einen niedrigen Wert festgelegt ist, um eine Neuauswahl zur überlappenden 2G-Zelle für Teilnehmer, die zu dem Betreiber gehören und sich in der nicht gemeinsam genutzten Zelle befinden, auszulösen.

6. Verfahren nach Anspruch 5, wobei Qoffset auf -50 dB festgelegt ist.

7. Telekommunikationssystem, das Folgendes umfasst:
eine Anzahl von Funkzugangszellen (1), von denen eine erste Gruppe von Zellen (2) von unterschiedlichen Betreibern gemeinsam genutzt wird und von denen mindestens eine zweite Gruppe von Zellen (3A, 3B) von allen Betreibern nicht gemeinsam genutzt wird;
eine Anzahl von Mobilstationen (4), die je zu einem Teilnehmer eines der unterschiedlichen Betreiber gehören, wobei das System ausgelegt ist, um Zellenzugangseinschränkungssteuerung unter Verwendung einer Anzahl von Zugangsklassen zu unterstützen,
**dadurch gekennzeichnet, dass**:
eine Untermenge der Zugangsklassen jedem gemeinsam nutzenden Betreiber zugewiesen wird;
für jeden Betreiber seine jeweilige Untermenge der Zugangsklassen seinen Teilnehmern zugeordnet wird;
eine Zugangseinschränkung von Zellen in nicht gemeinsam genutzten Zellen (3A, 3B) so festgelegt wird, dass Mobilstationen (4) von Teilnehmern von Betreibern, welche die Zellen nicht gemeinsam nutzen, in der Verwendung der nicht gemeinsam genutzten Zellen eingeschränkt sind.

8. Telekommunikationssystem nach Anspruch 7, wobei die Zellenzugangseinschränkungssteuerung so ist wie im 3rd Generation Partnership Project, 3GPP, definiert.

9. Telekommunikationssystem nach Anspruch 8, wobei die Zugangsklassen der Teilnehmer dauerhaft auf dem Teilnehmeridentifikationsmodul, USIM (5), gespeichert werden.

10. Telekommunikationssystem nach einem der Ansprüche 7 und 8, wobei Zugangsrechte von Mobilstationen im verbundenen Modus mittels Zugangsinformationen eines gemeinsam genutzten Netzbereichs, SNA, für diese Mobilstation gesteuert werden.

11. Telekommunikationssystem nach einem der Ansprüche 8-10, wobei das Telekommunikationssystem weiter ausgelegt ist, um mindestens einen Betreiber der zweiten Generation, 2G, zu unterstützen, und ein solcher Betreiber, der eine nicht gemeinsam genutzte Zelle nicht gemeinsam nutzt, eine überlappende Bedeckung mittels einer 2G-Zelle aufweist, wobei der Qoffset der überlappenden 2G-Zelle auf einen niedrigen Wert festgelegt ist, um eine Neuauswahl zur überlappenden 2G-Zelle für Teilnehmer, die zu dem Betreiber gehören und sich in der nicht gemeinsam genutzten Zelle befinden, auszulösen.

12. Telekommunikationssystem nach Anspruch 11, wobei Qoffset auf -50 dB festgelegt ist.

## Revendications

1. Procédé de partage d'un système de télécommunications comprenant :
un nombre de cellules d'accès radio (1), un premier groupe (2) desquelles étant partagé entre différents opérateurs, et au moins un second groupe (3A, 3B) desquelles n'étant pas partagé entre tous les opérateurs ;
un nombre de stations mobiles (5), chacune appartenant à un abonné de l'un des différents opérateurs, le système étant agencé pour supporter la commande de restriction d'accès cellulaire en utilisant un nombre de classes d'accès,
**caractérisé par** les étapes consistant en :
l'attribution d'un sous-ensemble des classes d'accès à chaque opérateur partageur :
l'assignation par chaque opérateur de son sous-ensemble respectif des classes d'accès à ses abonnés ;
le réglage d'une restriction d'accès cellulaire dans les cellules non partagées (3A, 3B) de telle sorte que les stations mobiles (5) des abonnés aux opérateurs ne partageant pas les cellules aient des restrictions d'utilisation des cellules non partagées.

2. Procédé selon la revendication 1, dans lequel la commande de restriction d'accès cellulaire est telle que définie dans le 3rd Generation Partnership Project, 3GPP.

3. Procédé selon la revendication 2, dans lequel les classes d'accès des abonnés sont mémorisées en permanence sur le module d'identité d'abonné, USIM (4).

4. Procédé selon l'une quelconque des revendications 2 et 3, dans lequel les droits d'accès des stations mobiles en mode connecté sont commandés au moyen d'informations d'Accès à la zone de réseau partagée, SNA, de cette station mobile.

5. Procédé selon l'une quelconque des revendications 2, 3 et 4, dans lequel le système de télécommunications supporte en outre au moins un opérateur de seconde génération, 2G, et un tel opérateur ne partageant pas une cellule non partagée a une couverture chevauchante au moyen d'une cellule 2G, le paramètre de décalage QOffset de la cellule 2G chevauchante étant réglé à une valeur basse pour provoquer une resélection vers la cellule 2G chevauchante des abonnés appartenant audit opérateur et situés dans la cellule non partagée.

6. Procédé selon la revendication 5, dans lequel le paramètre de décalage Qoffset est réglé à -50 dB.

7. Système de télécommunications comprenant :
un nombre de cellules d'accès radio (1), un premier groupe (2) desquelles est partagé entre différents opérateurs, et au moins un second groupe (3A, 3B) desquelles n'étant pas partagé entre tous les opérateurs ;
un nombre de stations mobiles (4), chacune appartenant à un abonné de l'un des différents opérateurs, le système étant agencé pour supporter une commande de restriction d'accès cellulaire en utilisant un nombre de classes d'accès,
**caractérisé en ce que** :
un sous-ensemble des classes d'accès est attribué à chaque opérateur partageur ;
pour chaque opérateur, son sous-ensemble respectif des classes d'accès est assigné à ses abonnés ;
une restriction d'accès cellulaire dans les cellules non partagées (3A, 3B) est réglée de telle sorte que les stations mobiles (4) des abonnés aux opérateurs ne partageant pas les cellules aient des restrictions d'utilisation des cellules non partagées.

8. Système de télécommunications selon la revendication 7, dans lequel la commande de restriction d'accès cellulaire est telle que définie dans le 3rd Generation Partnership Project, 3GPP.

9. Système de télécommunications selon la revendication 8, dans lequel les classes d'accès des abonnés sont mémorisées en permanence sur le module d'identité d'abonné, USIM (5).

10. Système de télécommunications selon l'une quelconque des revendications 7 et 8, dans lequel les droits d'accès des stations mobiles en mode connecté sont commandés au moyen d'informations d'Accès à la zone de réseau partagée, SNA, de cette station mobile.

11. Système de télécommunications selon l'une quelconque des revendications 8 à 10, le système de télécommunications étant agencé en outre pour supporter au moins un opérateur de seconde génération, 2G, et un tel opérateur ne partageant pas une cellule non partagée ayant une couverture chevauchante au moyen d'une cellule 2G, le paramètre de décalage Qoffset de la cellule 2G chevauchante étant réglé à une valeur basse pour provoquer une resélection vers la cellule 2G chevauchante des abonnés appartenant audit opérateur et situés dans la cellule non partagée.

12. Système de télécommunications selon la revendication 11, dans lequel le paramètre de décalage QOffset est réglé à -50 dB.
